# EUROPEAN PATENT SPECIFICATION

(11) **EP 2 256 988 B1**
(45) Date of publication and mention of the grant of the patent: **03.08.2011**
(21) Application number: 09305475.7
(22) Date of filing: 25.05.2009
(51) Int. Cl.: H04L 12/24, G06F 9/50

(54) **Management of a communication network**
Verwaltung eines Kommunikationsnetzes
Gestion de réseau de communication

(43) Date of publication of application: 01.12.2010
(73) Proprietor: Alcatel Lucent, 75008 Paris (FR)
(72) Inventor: Donadio, Pasquale, 80129, NAPOLI (IT); Paparella, Andrea, 21052, BUSTO ARSIZIO (IT); Riglietti, Roberto, 20059, VIMERCATE (IT)
(74) Representative: Schmidt, Werner Karl

(56) References cited:
- EP-A- 1 693 763
- WO-A-2007/146366
- WO-A-2008/018051
- DONADIO P ET AL: "Service-oriented technology for TMN-based network management services" BELL LABS TECHNICAL JOURNAL, WILEY, CA, US, [Online] vol. 14, no. 1, 18 May 2009 (2009-05-18), pages 161-172, XP001522692 ISSN: 1089-7089 Retrieved from the Internet: URL:http://www3.interscience.wiley.com/jou rnal/122384470/abstract?CRETRY=1&SRETRY=0>
- TRUSZKOWSKI W F ET AL: "AEGONE - Agent-Enabled, Grid-Oriented, and just-in-time Network of Experts" AEROSPACE CONFERENCE, 2006 IEEE BIG SKY, MT, USA 04-11 MARCH 2006, PISCATAWAY, NJ, USA,IEEE, 4 March 2006 (2006-03-04), pages 1-7, XP010928699 ISBN: 978-0-7803-9545-9

## Description

### Field of the invention

The present invention relates to the field of communication networks. In particular, the present invention relates to management of a communication network.

### Background

As it is known, managing a communication network requires performing various operations (which will be termed herein after "management operations"), such as for instance:
- monitoring performances of the network;
- configuring the network elements and their resources (ports, boards, cross-connections, etc.);
- updating the software applications stored at the network elements; and
- managing possible failures occurring in the network.

Typically, the management operations are performed by means of a "network management system" or, briefly, NMS. The NMS is a computer connected to the communication network, which stores and executes a set of management software programs (which will be termed herein after "management applications"), each being suitable for performing a given management operation. Further, the NMS is equipped with a "manager", i.e. a software component allowing it to communicate with all the network elements of the communication network, in order to give instructions to and/or exchanging data with the network elements. Besides, each network element has a respective "agent", i.e. a software component suitable for interacting with the NMS manager. This allows the network element to interpret the instructions given by the NMS and to execute such instructions.

The above described management mechanism is therefore based on a clean distinction between the NMS, acting as the "managing entity", and the network elements, acting as "managed entities".

Donadio P. et al. "Service-oriented technology for TMN-based network management services", Bell Labs Technical Journal, Wiley, CA, US, [Online] vol. 14, no.1, 18 May 2009 (2009-05-18), pages 161-172, discloses a framework that conceptually transforms a layered TMN architecture into a distributed flat network while integrating TMN components and the functions that they perform. The introduction of technologies and standards commonly referred to as Web services into the generalized TMN interface allows TMN management applications to provide complex TMN management services to users via user-friendly Web browsers. It further discloses a purposive agent technology in order to embrace a strategy to manage agent-mediated grid services for a TMN application framework.

### Summary

The inventors have noticed that the above described management mechanism has some drawbacks.

In particular, as mentioned above, configuring the network elements and their resources is a management operation that is commonly performed by a network management operator, who suitably manually operates the NMS for imparting instructions to the network elements.

In case an event occurs in the communication network, which event requires changing configuration of one or more network elements, such a change must be performed by the operator. The change of configuration may involve several network elements, especially in current communication networks comprising a very high number of network elements. Accordingly, such change of configuration is a very long and complex operation that disadvantageously increases the OPEX ("OPerating EXpenditure") of the communication network.

Moreover, current communication networks often comprise network elements of different types (SDH, SONET, OTN, Ethernet, IP, etc.) and even network elements comprising sub-systems of different types. Therefore, disadvantageously, implementing a change of configuration requires knowledge of a wide variety of management protocols.-This disadvantageously further increases complexity of the operations required for changing configuration, thereby further increasing the OPEX of the communication network.

An object of the present invention is therefore providing a method for managing a communication network that overcomes the aforesaid drawbacks.

In particular, an object of the present invention is providing a method for managing a communication network that allows changing configuration of one or more network elements of the communication network in a simpler way, thereby reducing the OPEX of the communication network.

According to a first aspect, the present invention provides a method for managing a communication network comprising at least one network element, the method comprising the following steps:
a) implementing a computation grid in the communication network;
b) executing a purposive cell in the computation grid, the executing comprising:
   b1) receiving a purpose command through the computation grid, the method being characterized in that step b1) comprises receiving the purpose command indicating a purpose that the purposive cell should reach and at least one strategy according to which the purposive cell should try reaching the purpose, the purpose relating to an operation of configuring the at least one network element; and in that the step of executing comprises:
   b2) performing at least one action for reaching the purpose.

Preferably, step b2) comprises:
- by means of a purpose analyser of the purposive cell, selecting a highest priority strategy among the at least one strategy;
- by means of a purposive logic of the purposive cell, performing the at least one action for reaching the purpose following the highest priority strategy; and
- by means of a purpose follower of the purposive cell, monitoring an outcome of the at least one action taken by the purposive logic and determining whether the purpose is reachable following the highest priority strategy.

Preferably:
- if the purpose follower determines that the purpose is reachable following the highest priority strategy, the purpose follower implements a negative feedback inducing the purposive cell to converge towards the purpose;
- if the purpose follower determines that the purpose is not reachable following the highest priority strategy, the purpose analyzer determines whether the purpose command indicates a lower priority strategy, and:
- in the affirmative, the purpose analyzer selects the lower priority strategy and the purposive logic performs the at least one action for reaching the purpose following the lower priority strategy; and
- in the negative, the purpose follower implements a positive feedback inducing the purposive cell to converge towards a stable meta-state.

Profitably, step b2) comprises:
- delegating the at least one action to a further purposive cell; and
- receiving from the further purposive cell a message indicating an outcome of the at least one action.

Preferably, step b2) comprises:
- transmitting a further purpose command to the further purposive cell, the further purpose command indicating a further purpose that the further purposive cell should reach; and
- receiving from the further purposive cell a message indicating whether the further purposive cell reached the further purpose.

Preferably, step b2) comprises:
- receiving from a service consumer connected to the computation grid a request for consuming a management service;
- processing the request; and
- in case of positive outcome of the processing, performing at least one action for providing the management service to the service consumer.

Preferably, step b2) comprises:
- receiving from a service consumer connected to the computation grid a request for localizing a management service in the computation grid;
- processing the request; and
- in case of positive outcome of the processing, performing at least one action for localizing a management service in the computation grid.

According to a second aspect, the present invention provides a communication system comprising a communication network, the communication network comprising at least one network element, the communication system further comprising:
a) a computation grid implemented in the communication network; and
b) a purposive cell suitable for being executed in the computation grid, the purposive cell being configured to:
   b1) receive a purpose command through the computation grid,
      the communication system being characterized in that the purpose command indicates a purpose that the purposive cell should reach and at least one strategy according to which the purposive cell should try reaching the purpose, the purpose relating to an operation of configuring the at least one network element; and in that the purposive cell is further configured to:
   b2) perform at least one action for reaching the purpose.
      According to a third aspect, the present invention provides a purposive cell suitable for being executed in a computation grid implemented in a communication network, the communication network comprising at least one network element, the purposive cell being configured to:
      b1) receive a purpose command through the computation grid, the purposive cell being characterized in that the purpose command indicates a purpose that the purposive cell should reach and at least one strategy according to which the purposive cell should try reaching the purpose, the purpose relating to an operation of configuring the at least one network element; and in that the purposive cell is further configured to:
      b2) perform at least one action for reaching the purpose.

### Brief description of the Figures

Embodiments of the invention will be better understood by reading the following detailed description, given by way of example and not of limitation, to be read by referring to the accompanying drawings, wherein:
- Figure 1 schematically shows an exemplary communication system suitable for implementing the method according to an embodiment of the present invention;
- Figure 2 schematically shows the structure of a purposive cell implemented in the communication system of Figure 1;
- Figue 3 is a flow chart of the operation of the purposive cell of Figure 2;
- Figure 4 schematically shows the various steps of the method according to an embodiment of the present invention, applied to an exemplary scenario;
- Figures 5a and 5b schematically show the operation of two purposive cells of different types (TPA and TSA, respectively); and
- Figure 6 schematically shows the structure of a multi-cell system, according to a further embodiment of the present invention.

### Description of embodiments

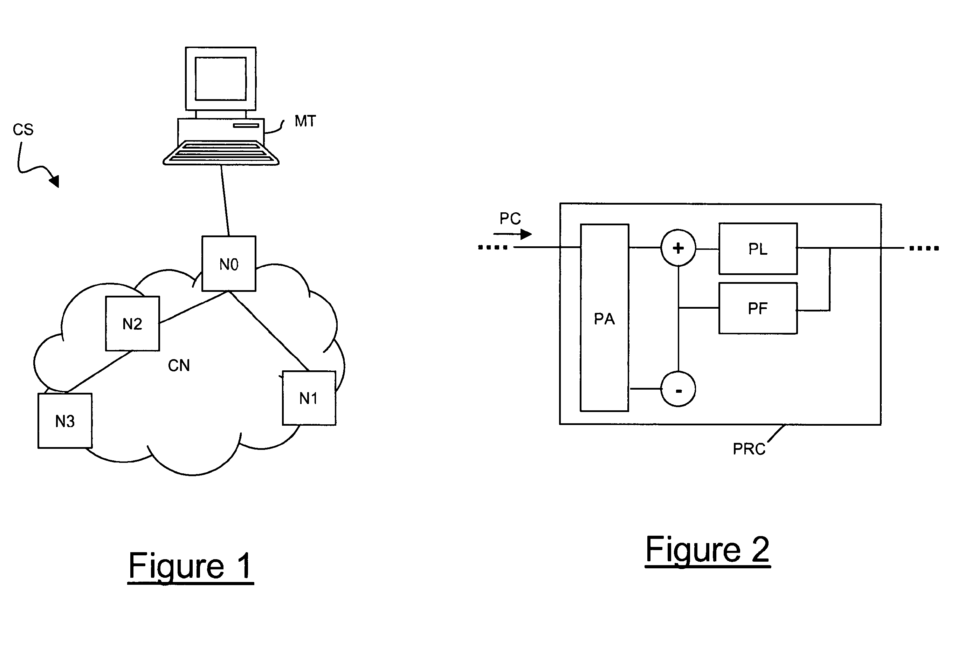

Figure 1 schematically shows an exemplary communication system CS comprising a communication network CN and a management terminal MT cooperating with the communication network CN.

The communication network CN may comprise a packet-switched network (such as e.g. an Ethernet network, an ATM network, etc.) and/or a circuit-switched network (such as a TDM network of the type SDH, SONET, etc.). The communication network CN comprises a plurality of network elements. For simplicity, the communication network of Figure 1 only comprises four network elements N0, N1, N2 and N3 arranged according to a partially meshed topology. In particular, the network element N0 is adjacent to the network elements N1 and N2, while the network element N2 is adjacent to the network element N3. Each network element N0, N1, N2 and N3 may be based on a single transmission technology (i.e. it may be an Ethernet switch, an IP router, an SDH node, etc.), or it may comprise different sub-systems, each sub-system being based on a different transmission technology.

The management terminal MT is a computer connected to one of the network elements of the communication network CN. By way of example, Figure 1 shows that the management terminal MT is connected to the network element N0. Preferably, the management terminal MT is provided with a browser (not shown in Figure 1) which allows an operator to visualize on the display of the management terminal MT a graphic representation of the resources of the communication network CN. Advantageously, by means of the terminal MT an operator responsible of managing the communication network CN may monitor the status of the communication network CN (for instance,-traffic on the various links, performance of the network elements, etc.), instruct the communication network CN to perform a given management operation, check the outcome of a management operation, etc

According to a first embodiment of the present invention, the communication network CN is suitable for executing one or more purposive cells. In the following description-and in the claims, the expression "purposive cell" will designate a software code portion configured to receive a purpose command indicative of one or more purposes, and to perform and/or or coordinate one or more management operations aimed to reach the one or more purposes. Preferably, a purposive cell has one or more of the following basic capabilities: communication, coordination, reasoning about itself, reasoning about other purposive cells, reasoning about its tasks, and learning about its environment.

Further, in the following description and in the claims, the term "purpose" will designate the result of a management operation, in particular an operation of changing configuration of one or more network elements.

An exemplary purpose may be, for instance, synchronizing a set of network elements (sub-network) to a given clock signal, or setting the security threshold of a network element to a given level. According to preferred embodiments of the present invention, a purpose may be either a static purpose or a dynamic purpose. A static purpose is defined *a priori* by an operator responsible to manage the communication network CN, while a dynamic purpose may evolve in time according to the conditions of the communication network CN. Further, the purpose may be a network element purpose (if it relates to a single network element) or a network purpose (if it relates to more than one network element).

Preferably, the purposive cells are executed by the communication network CN according to a grid computing technique. To this aim, preferably, the network elements N0, N1, N2 and N3 are part of a same calculation grid, and they communicate by means of an application which is termed "middleware". For instance, the network elements N0, N1, N2 and N3 may be part of a calculation grid of the type proposed by the Globus Alliance, which uses the middleware Globus. For allowing the purposive cells to be executed by the calculation grid, the purposive cells are preferably implemented using a service oriented architecture (briefly, SOA). More preferably, the purposive cells are provided with respective web service interfaces, by means of which they access the computation grid and communicate each other.

Executing the purposive cells according to a grid computing technique implies that a purposive cell configured to reach a purpose for a given network element is not necessarily executed at the same network element. This advantageously allows distributing execution of the various purposive cells in the communication network CN so as to optimize usage of the computation resources of the communication network CN.

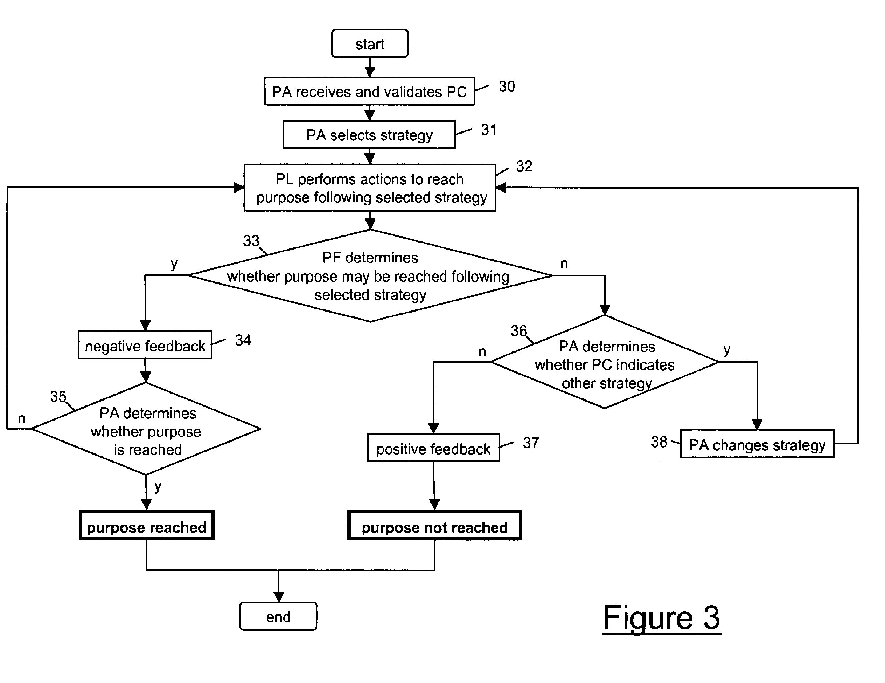

Figure 2 shows the logical structure of a purposive cell PRC according to an embodiment of the present invention. Preferably, the purposive cell PRC is logically divided in three components, namely a purpose analyzer PA, a purposive logic PL1 and a purpose follower PF1. The operation of the purposive cell PRC and its components will be now described in detail with reference to the flow chart of Figure 3.

As mentioned above, the purposive cell PRC is configured to receive a purpose command PC indicative of one or more purposes. In case the one or more purposes are static, the purpose command PC is generated and transmitted to the purposive cell PRC by the management terminal MT through the computation grid. Otherwise, if the one or more purposes are dynamic, the purpose command PC is generated and transmitted to the purposive cell PRC by another purposive cell (not shown in Figure 2) through the computation grid.

The purpose command PC preferably comprises, for each purpose, a first field indicating the purpose to be reached and one or more second fields, each indicating a respective strategy that the purposive cell PRC should follow for reaching that purpose, a strategy describing one or more actions to be taken for reaching that purpose. Preferably, in case more than one strategy is indicated in the purpose command PC, the second fields also indicate the priority of the various strategies, i.e. the order according to which the various strategies must be followed. A strategy with lower priority is followed only in case a strategy with higher priority does not reach the purpose. The purpose command PC is preferably written in XML (Extensible Markup Language). The purpose command PC is preferably received at the purposive cell PRC by means of the purpose analyzer PA (step 30), that preferably validates it and determines whether said purpose command PC includes static or dynamic purpose(s). Further, the purpose analyzer PA preferably selects from the purpose command PC the strategy indicated with highest priority (step 31). In case a single strategy is indicated in the purpose command PC, during step 31 the purpose analyzer PA of course selects that strategy.

The purpose analyzer PA then invokes the purposive logic PL, that preferably starts performing actions aimed to reach the purpose indicated in the purpose command PC following the strategy selected by the purpose analyzer PA (step 32). The purpose follower PF monitors the outcome of the actions taken by the purposive logic PL and determines whether the purpose can be reached following the selected strategy (step 33).

If the purpose follower PF determines that the purpose can be reached following the selected strategy, it preferably implements a negative feedback (step 34) that induces the purposive cell PRC to converge towards the purpose. More particularly, the purpose follower PF invokes the purpose analyzer PA, that evaluates whether the purpose has been reached (step 35). If the purpose has not been reached, the purpose analyzer PA invokes again the purpose logic PL, that continues performing actions aimed to reach the purpose indicated in the purpose command PC following the selected strategy (i.e. it repeats step 32). Steps 32, 33, 34 and 35 are cyclically repeated according to a negative feedback scheme until, during step 35, the purpose analyzer PA determines that the purpose has been reached.

If, during step 33, the purpose follower PF determines that the purpose can not be reached following the selected strategy, it preferably invokes the purpose analyzer PA, that determines whether other strategies are indicated in the purpose command PC (step 36).

If no other strategies are indicated in the purpose command PC, the purpose follower PF preferably implements a positive feedback (step 37) that induces the purposive cell PRC to converge towards a stable meta-state, in which the purpose has not been reached. In this meta-state, the purposive logic PL may "generate a management message (step not shown in Figure 3) for notifying the operator that the purpose has not been reached, and that a manual intervention is required. In particular, the management message is preferably transmitted to a further purposive cell (not shown in the drawings) that will be termed "management purposive cell", and whose role is accessing the management plane of the communication network CN.

Otherwise, if at least a lower priority strategy is indicated in the purpose command PC, the purpose analyzer PA changes strategy (step 38), and then invokes the purposive logic PL, that performs again step 32. The purpose follower PF performs again step 33 for determining whether the purpose may be reached following the new strategy. In the affirmative, steps 32, 33, 34 and 35 are cyclically repeated according to a negative feedback scheme, until the purpose is reached. Otherwise, step 36 is repeated and, in no further lower priority strategies are indicated in the purpose command PC, the positive feedback is implemented (step 37). If a further lower strategy is indicated in the purpose command PC, the purpose analyzer PA repeats step 38, and so on.

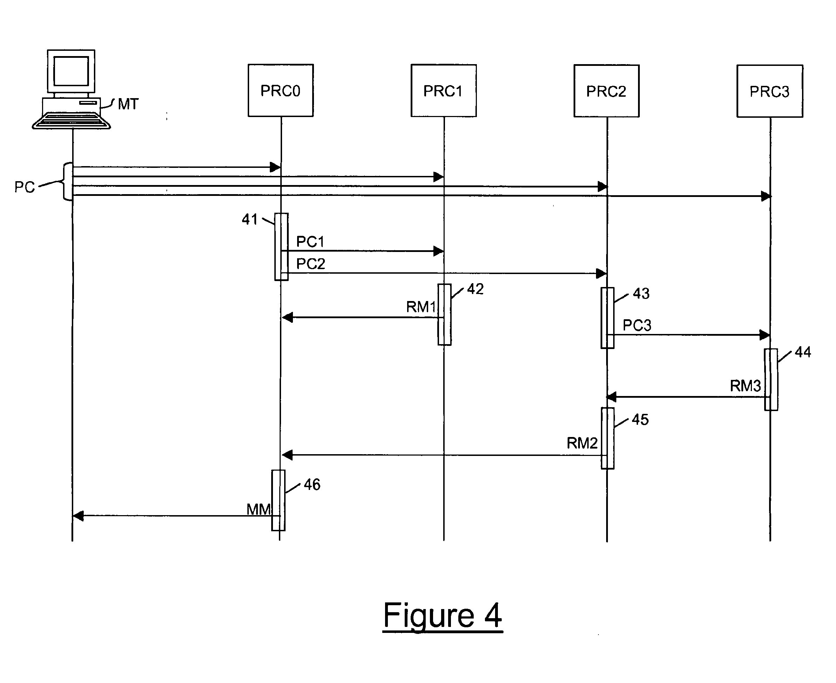

With reference to Figure 4, an application of the above described purposive cell to an exemplary scenario will be described in detail.

According to this exemplary scenario, the communication network CN is a synchronous network (e.g. SDH or SONET), and accordingly each network element N0, N1, N2 and N3 should be synchronized to a reference clock signal having a quality higher than a predetermined threshold. In case one or more network elements stop receiving the reference clock signal or in case the quality of the reference clock signal decreases under the predetermined threshold, the network elements typically enter a hold-off status, in which each network element uses its own local clock signal.

In this scenario, it is desirable to that the duration of the period in which the network elements of the communication network CN are in hold-off status is shorter than a predefined maximum duration (e.g. 3600 seconds). For reaching this purpose at the network elements N0, N1, N2 and N3, four purposive cells PRC0, PRC1, PRC2 and PRC3 are preferably implemented in the communication network CN,each being responsible to reach the-above purpose for a respective network element N0, N1, N2 and N3. The structure of each purposive cell PRC0, PRC1, PRC2 and PRC3 is similar to the structure of the purposive cell PRC shown in Figure 2 and described above. Accordingly, a detailed description will not be repeated.

As shown in Figure 4, by -means of the management terminal MT, the operator may generate a purpose command PC and transmit it to each of the purposive cells PRC0, PRC1, PRC2 and PRC3. The purpose command PC preferably comprises a first field indicating that the purpose is limiting the duration of the period in which the network element is in hold-off status to the predefined maximum duration. The purpose command PC further preferably comprises two second fields indicating a higher priority strategy and a lower priority strategy. The higher priority strategy provides for scanning the local ports of the network element, evaluating whether at least one of the clock signals received through these local ports has a quality higher than the predetermined threshold and, in the affirmative, changing configuration of the network element so as to synchronize it to the highest quality clock signal. A lower priority strategy (to be applied in case the first strategy fails) provides asking each of the adjacent network elements to scan its local ports, evaluating whether at least one of the clock signals received through these local ports has a quality higher than the predetermined threshold, and in the affirmative changing configuration of this adjacent network element so as to synchronize it to the highest quality clock signal.

Assuming now that the network element N0 enters the hold-off status, upon expiration of the maximum duration the purposive cell PRC0 activates and performs the following operations (indicated in Figure 4 as step 41). Its purpose analyzer processes the purpose command PC and selects the higher priority strategy (steps 30 and 31 of Figure 3), according to which the local ports of the network element N0 are scanned. Then, in step 41, the purposive logic of the purposive cell PRC0 scans the local ports of the network element N0 and evaluates the quality of the clock signals received through these local ports (step 32 of Figure 3). Then, during step 41, the purpose follower of the purposive cell PRC0 compares the quality values received from the purposive logic with the predetermined threshold for determining whether at least one of such quality values is higher than the predetermined threshold, thus determining whether the purpose can be reached following the higher priority strategy (step 33 of Figure 3).

If at least one of the clock signals received at the network element N0 has a quality higher than the predetermined threshold, during step 41 the purpose follower determines that the purpose may be reached following the higher priority strategy, and accordingly implements the above described negative feedback (step 34 of Figure 3). Steps 32, 33, 34 and 35 are repeated until the purpose analyzer of the purposive cell PRC0 determines that the purpose has been reached, i.e. the network element N0 is no more in hold-off status and is now synchronized to the clock signal having the highest quality among the clock signals received at the network element N0.

Otherwise, if none of the clock signals received at the network element N0 has a quality higher than the predetermined threshold, during step 41 the purpose follower determines that the purpose can not be reached following the higher priority strategy. Accordingly, the purpose follower of the purposive cell PRC0 invokes the purpose analyzer, that selects the lower order strategy (steps 36 and 38 of Figure 3). During step 41 the purpose analyzer then invokes the purposive logic, that performs actions for reaching the purpose following the lower priority strategy (step 32 of Figure 3), i.e. it transmits further purpose commands PC1, PC2 to the purposive cells PRC1, PCR2 responsible of reaching the purpose for the network elements N1, N2 adjacent to the network element N0. The content of the further purpose commands PC1, PC2 is substantially the same as the content of the purpose command PC transmitted by the management terminal MT. Accordingly, a detailed description will not be repeated.

Each of the purposive cells PRC1, PRC2 receives the further purpose command PC1, PC2 from the purposive cell PRC0. It has to be noticed that, while the purpose of the purpose command PC transmitted by the management terminal MT to the purposive cells PRC0, PRC1, PRC2, PRC3 is a static purpose, the purpose of the further purpose commands PC1, PC2 is a dynamic purpose, since it has been determined by the purposive cell PRC0.

Each purposive cell PRC1,PRC2,preferably processes the respective purpose command PC1, PC2 according to the flow chart of Figure 3.

In particular, during step 42, the purposive cell PRC1 validates the purpose command PC1 (step 30 of Figure 3), selects the higher priority strategy (step 31 of Figure 3) and accordingly scans the ports of the network element N1 (step 32 of Figure 3).

If at least one of the clock signals received at such local ports has a quality higher than the predetermined threshold, during step 42 the purposive cell PRC1 determines that the purpose may be reached following the higher priority strategy, and accordingly activates the negative feedback (step 34 of Figure 3) for converging to the purpose. When the purpose is reached at the network element N1, during step 42 the purposive cell PRC1 preferably sends a response message RM1 to the purposive cell PRC0, for informing it that the purpose has been reached.

If none of the clock signals received at the local ports of the network element N1 has a quality higher than the predetermined threshold, the purposive cell PRC1 during step 42 determines that the purpose can not be reached following the higher priority strategy, selects the lower order strategy (step 38 of Figure 3) and accordingly looks for network elements adjacent to the network element N1. Since it has been assumed that the network element N1 is adjacent only to N0, during step 42 the purposive cell PRC1 determines that the purpose can not be reached following the lower priority strategy, that no further lower priority strategies are available, and accordingly activates the positive feedback (step 37 of Figure 3). During step 42, the purposive cell PRC1 then preferably sends a response message RM1 to the purposive cell PRC0, for informing it that the purpose has not been reached.

As to the network element N2, during step 43 it validates the purpose command PC2 (step 30 of Figure 3), selects the higher priority strategy (step 31 of Figure 3) and accordingly scans the ports of the network element N2 (step 32 of Figure 3).

If at least one of the clock signals received at such local ports has a quality higher than the predetermined threshold, during step 43 the purposive cell PRC2 determines that the purpose may be reached following the higher priority strategy and accordingly activates the negative feedback (step 34 of Figure 3) for converging to the purpose. When the purpose is reached at the network element N2, during step 43 the purposive cell PRC2 preferably sends a response message (not shown in Figure 4) to the purposive cell PRC0, for informing it that the purpose has been reached.

If none of the clock signals received at the local ports of the network element N2 has a quality higher than the predetermined threshold, during step 43 the purposive cell PRC2 determines that the purpose can not be reached following the higher priority strategy, selects the lower order strategy (step 38 of Figure 3) and accordingly it transmits a further purpose command PC3 to the purposive cell PRC3 responsible of reaching the purpose for the network element N3 adjacent to the network element N2. The content of the further purpose command PC3 is substantially the same as the content of the purpose command PC transmitted by the management terminal MT. Accordingly, a detailed description will not be repeated.

During step 44, the purposive cell PRC3 preferably processes the purpose command PC3 according to the flow chart of Figure 3. In particular, during step 44 the purposive cell PRC3 validates the purpose command PC3 (step 30 of Figure 3), selects the higher priority strategy (step 31 of Figure 3) and accordingly scans the ports of the network element N3 (step 32 of Figure 3).

If at least one of the clock signals received at such local ports has a quality higher than the predetermined threshold, during step 44 the purposive cell PRC3 determines that the purpose may be reached following the higher priority strategy, and accordingly activates the negative feedback (step 34 of Figure 3) for converging to the purpose. When the purpose is reached at the network element N3, during step 44 the purposive cell PRC3 preferably sends a response message RM3 to the purposive cell PRC2, for informing it that the purpose has been reached. If none of the clock signals received at the local ports of the network element N3 has a quality higher than the predetermined threshold, during step 44 the purposive cell PRC3 determines that the purpose can not be reached following the higher priority strategy, selects the lower order strategy (step 38 of Figure 3) and accordingly looks for network elements adjacent to the network element N3. Since it has been assumed that the network element N3 is adjacent only to N2, the purposive cell PRC3- determines that the purpose can not be reached following the lower priority strategy, that no further lower priority strategies are available, and accordingly activates the positive feedback (step 37 of Figure 3). During step 44, the purposive cell PRC3 then preferably sends a response message RM3 to the purposive cell PRC2, for informing it that the purpose has not been reached.

During step 45, the purposive cell PRC2 receives the response message RM3 from the purposive cell PRC3.

If response message RM3 indicates that the purpose has been reached at the network element N3 (i.e. the network element N3 is synchronized to a clock signal having a quality higher than the predetermined threshold), during step 45 the purposive cell PRC2 preferably selects again the higher order strategy. The purposive cell PRC2 may select again the higher order strategy since it is in a stable state, and it may accordingly apply again all the strategies indicated in the purpose command PC2, according to the priorities indicated in the purpose command PC2 itself. Preferably, this process is periodically activated (e.g. once per hour). Passing from the higher priority strategy to the lower priority strategy is performed by checking whether the predefined threshold has been overcome, while passing from the lower order strategy to the higher order strategy is performed when the local clock signal has a quality higher than the predefined threshold (and higher of the quality of the initial one, that is checked using other thresholds) for preventing possible instabilities when applying the various strategies (thanks to an hysteresis-based model).

The purposive cell PRC2 accordingly scans again the local ports of the network element N2 (step 32 of Figure 3). Since at least the clock signal received from the network element N3 has a quality higher than the predefined threshold, the purposive cell PRC2 determines that the purpose can now be reached following the higher priority strategy, and accordingly activates the negative feedback (step 34 of Figure 4) for converging to the purpose. When the purpose is reached at the network element N2, during step 45 the purposive cell PRC2 preferably sends a response message RM2 to the purposive cell PRC0,for informing it that the purpose has been reached.

Otherwise, if the response message RM3 received by the purposive cell PRC2 from the purposive cell PRC3 indicates that the purpose has not been reached at the network element N3 (i.e. the network element N3 is not synchronized to a clock signal having a quality higher than the predetermined threshold), during step 45 the purposive cell PRC2 determines that the purpose can not be reached following the lower priority strategy, that no further lower priority strategies are available, and accordingly activates the positive feedback (step 37 of Figure 3). During step 45, the purposive cell PRC2 then preferably sends a response message RM2 to the purposive cell PRC0, for informing it that the purpose has not been reached.

The purposive cell PRC0 receives the response messages RM1, RM2 from the purposive cells PRC1, PRC2.

If at least one of the response messages RM1, RM2 indicates that the purpose has been reached at the network element N1, N2 (i.e. at least one of the network elements N1, N2 is synchronized to a clock signal having a quality higher than the predetermined threshold), during step 46 the purposive cell PRC0 preferably selects again the higher order strategy, and accordingly scans again the local ports of the network element N0 (step 32 of Figure 3). Since at least one of the clock signals received from the network elements N1, N2 has a quality higher than the predefined threshold, the purposive cell PRC0 determines that the purpose can now be reached following the higher priority strategy, and accordingly activates the negative feedback (step 34 of Figure 4) for converging to the purpose.

Otherwise, if both the response messages RM1, RM2 indicate that the purpose has not been reached at the network elements N1, N2 (i.e. none of the network elements N1, N2 is synchronized to a clock signal having a quality higher than the predetermined threshold), during step 46 the purposive cell PRC0 determines that the purpose can not be reached following the lower priority strategy, that no further lower priority strategies are available, and accordingly activates the positive feedback (step 37 of -Figure 3). During step 46, the purposive cell PRC0 then preferably sends a management message MM to the management terminal MT for informing the operator that the purpose has not been reached, and that a manual intervention may be required for terminating the hold-off status at the network element N0.

-Therefore, advantageously, the purposive cells PRC0, PRC1, PRC2, PRC3 interact and cooperate for reaching a same purpose, i.e. limiting the duration of the period in which the network element N0 is in hold-off status to the predefined maximum duration. Such a purpose is a static purpose determined by the operator and sent to the purposive cells PRC0, PRC1, PRC2, PRC3 through the management terminal MT. As the purposive cell PRC0 determines that this static purpose for the network element N0 may not be reached following the higher priority strategy, the purposive cell PRC0 asks cooperation of the other purposive cells by transmitting corresponding dynamic purposes. In other words, a cascade of dynamic commands is generated in the computation grid, involving the other purposive cells PRC1, PRC2, PRC3, that accordingly give their contribution to reach the purpose.

Therefore, advantageously, the configuration of one or more network elements of the communication network CN may be changed in a very simple way, thereby reducing the OPEX of the communication network, manual intervention of the operator may be avoided. Indeed, changes of configurations required in the communication network CN are automatically performed by the purposive cells executed by the computation grid, that cooperate for reaching the purpose. Manual intervention of the operator is therefore required only in case the purposive cells are not able to reach the purpose according to any of the defined strategies.

Therefore, advantageously, according to preferred embodiments of the present invention, the purposive cells act as auto-managed agents that cooperate and collaborate and that dynamically follow strategies for managing the network elements (based on the grid middleware), with the aim of minimizing human intervention and consequent possible human errors, while limiting complexity in managing the whole communication network.

Further, advantageously, the mechanism for providing and consuming network services allows to define *a priori*:
one or more purposes for each single service of a network element;
   one or more purposes for each network element relating to a computation
   grid; and
- one or more purposes for the whole communication network.

Further, advantageously,-the mechanism for managing the communication network is very flexible, since it merges the management services of the network elements with the management services of the communication network.

For the communication network CN, different purposes may be defined.

Such purposes may be either network element purposes (in case the purpose relates to a single network element) or network purposes (in case the purpose relates to more than one network element). Further, a purpose may comprise a number of sub-purposes, that may relate to the same network element or to different network elements. For instance, a network purpose (e.g. synchronizing a sub-network) comprises a number of network-element sub-purposes (i.e. synchronizing each single network element).

According to preferred embodiments of the present invention, each purposive cell (e.g. the purposive cell PRC1) may be described, from a logical point of view, as a state machine having the following features:
- states: each state preferably corresponds to a different purpose or sub-purpose to be reached. A state may also be associated to a maximum time in which the purpose or sub-purpose of the state must be reached. A state may be atomic, if it corresponds to an atomic purpose (i.e. a purpose that can not be split in sub-purposes) or composite, if it corresponds to a composite purpose (i.e. a purpose comprising a number of sub-purposes);
- transitions: each transition specifies the relation between a first state (termed "input state") and a second state (termed "output state"), and has associated a task list and a task function. The task list preferably defines the tasks that the purpose cell may perform in order to pass from the input state to the output state. The task function preferably selects the actions to be performed from the task list;
- arcs: each arc connects a transition either to its input state or to its output state; and
   token: the tokens are preferably used to represent the dynamic behavior of the purposive cell. When a token arrives in a state, it-preferably indicates the "state change" and the progress in pursuing the purpose.

According to preferred embodiments of the present invention, the various states (in particular, the composite state and its atomic states) of a purposive cell are arranged according to a hierarchical structure, that may be represented by means of a tree diagram. The root of the tree diagram preferably represents the composite state, while the nodes of the tree diagram represent the atomic states, the various states being connected by transitions and arcs. The purposive cell preferably starts dealing with the composite state, and then goes through the tree diagram, thereby dealing with the atomic purposes.

According to preferred embodiments of the present invention, different types of purposive cells are provided, each type being suitable for dealing with a specific type of purpose. For instance, in the above exemplary scenario, the purposive cells PRC0, PRC1, PRC2, PRC3 are of a same type, and they may be termed "synchronization purposive cells", since they are suitable for reaching the purpose of synchronizing a network element. Each purposive cell may communicated either with purposive cells of the same type (like in the above exemplary scenario), or with purposive cells of a different type.

The purposive cells may also be classified according to different criteria. For instance, the purposive cells may be either TMN provider agents (briefly, TPA), or TMN service agents (briefly, TSA).

A TPA is a purposive cell configured to provide a TMN service supported by a back-end application to serve a service consumer. In other words, the TPA provides mechanisms allowing to configure the network elements. Such mechanisms are run in a process whose role is "advertising" the TMN services so that service consumers (i.e. graphic interfaces,browsers, CLI, etc.) possibly connecting to the computation grid may localize them, i.e. become aware of their availability. The way the TMN services are "advertised" in the computation grid is defined by the middleware Globus, and will be not described in further detail, since it is not relevant to the present invention.

On the other hand, a TSA is a purposive cell configured to obtain a TMN service from a TPA on behalf of a front-end application. In particular, a TSA represents both the service consumer that consumes a TMN service provided by a TPA, and a "broker" between the service consumer and the TMN service provided by the TPA (i.e. the TSA itself or another service consumer that uses the TSA as "broker"). In other words, a TSA is in charge of finding in the computation grid a TPA that provides a TMN service allowing the TSA to reach its purpose, and activate it. The operations of finding the TMN services is performed by the grid middleware (e.g. Globus), while the criteria for localizing the TMN services are implemented by the purposive cell, according to its purposive logic (this activity of the purposive cell is a "mediating" activity).

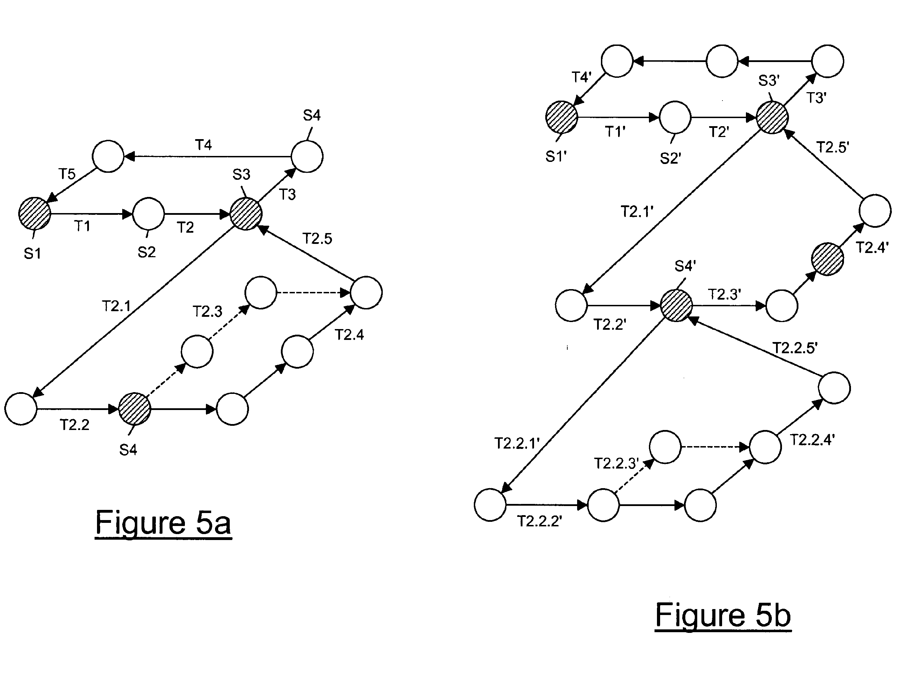

Figure 5a schematically -shows the- operation of a TPA. Each circle represents a state (i.e. a purpose) of the TPA. In particular, in the diagram of Figure 5a, each plain circle represents an atomic state of the TPA. In this case, the purpose may be reached only by evolving the state under consideration. In other words, no intermediate states/purposes are available for reaching a new stable state (i.e. the purpose can not be decomposed and can not be delegated). On the other hand, in Figure 5a each shaded circle represents a composite state of the TPA. In this case, the purpose may be reached passing through a number of intermediate states, that are propaedeutical to reach the purpose.

The TPA is configured to provide a TMN service to all the TSAs requesting it, possibly after performing a negotiation phase (for instance for implementing a secure access mechanism). The TPA may also delegate to one or more other TPAs of higher or lower hierarchic level one or more operations (or processes, jobs, etc.) that it is not able to perform directly (e.g. because the amount of computational resources available for the TPA is not sufficient for executing all the operations).

By referring to Figure 5a, the TPA firstly is in a stable state S1. The purposive cell implementing the state S1 has the purpose of providing on the computation grid a TMN service for managing a network element. The state S1 is a composite state,since providing a TMN service requires passing through a number of intermediate states (i.e. negotiation, processing, etc.).

The transition T1 allows passing from the state S1 to a state S2 in which a new request for the TMN service is received. Such a state S2 is implemented by a purposive cell having an atomic purpose, i.e. forwarding the request towards another purposive cell configured to process it.

The transition T2 allows passing from the state S2 to a state S3, in which the request is processed. The state S3 is a composite state, i.e. reaching the purpose requires passing through a number of intermediate states. In particular, the transitions T2.1 and T2.2 allow reaching a first processing level, that is represented by the state S4. The state S4 preferably is a negotiation composite state. On the other hand, the transitions T2.3, T2.4 and T2.5 allow reaching again the state S3 (which is a stable state), through two possible alternative paths, i.e.: an "exception path" (transition T2.3) when the negotiation can not be completed, and the request accordingly can not be processed; and a "job execution path" (transition T2.4) according to which the jobs for configuring the network element are performed.

After reaching again the stable state S3, the transition T3 allows passing from the state S3 to a stable atomic state S4, in which the results of processing the request are forwarded to the requester.

The transitions T4, T5 allow reaching intermediate states leading to provision of the TMN service in the computation grid, and its visibility to all the service consumers connected to the computational grid.

Figure 5b schematically shows the operation of a TSA. Each circle represents a state (i.e. a purpose) of the TSA. In particular, in the diagram of Figure 5b each plain circle represents an atomic state of the TSA, while each shaded circle represents a composite state of the TSA.

In particular, Figure 5b shows the above mentioned mechanisms for searching and discovering the TMN services made available by the TPA on the computational grid, the TSA acting as a "broker" between the TPAs and the service consumers (e.g. graphic interfaces, browser, or even an operator who wishes to manually perform a configuration).

By referring to Figure 5a, the TPA firstly is in a stable state S1'. The purposive cell implementing the state S1' has the purpose of localizing a given TMN service on the computation grid. The state S1' is a composite state, since localizing a given TMN service on the computation grid requires passing through a number of intermediate states.

The transition T1' allows-passing from the state S1' to a state S2', in which a new request for localizing a TMN service is received. This state S2' is implemented by a purposive cell whose atomic purpose is forwarding the request to another purposive cell configured to process it.

The transition T2' allows passing from the state S2' to a state S3', in which the request is processed. The state S3' is a composite state, i.e. reaching the purpose of processing the request requires passing through a number of intermediate states. In particular, the transitions T2.1' and T2.2' allow reaching a first processing level, that is represented by the state S4'. The state S4' is a composite state in which the TMN service is -found. The transitions T2.3', T2.4' and T2.5' allow reaching again the stable state S3', passing though a sequence of intermediate states i.e.: selection, negotiation and forward to the requester.

The state S4' in which the TMN service is localized is in turn a composite state. The transitions T2.2.1', T2.2.2', T2.2.3', T2.2.4' and T2.2.5' allow passing through the following states: query, search, finding and reply to the requester.

The transitions T3' and T4' allow passing from the state S3' to the state S1', in which the requested TMN service has been localized and is now accessible by all the service consumers connected to the computation grid.

According to preferred embodiments of the present invention, when due to the complexity of the purpose a single purposive cell cannot handle it with an acceptable performance, a multi-cell system is provided. Preferably, a multi-cell system comprises a number of purposive cells, that collaborate with each other to jointly solve the problem.

The exemplary scenario described above with reference to Figure 4 uses a multi-cell system, since it makes use of non-homogeneous purposive cells implementing composite states. In particular, the above exemplary scenario provides both for cooperation between homogenous cells (e.g. the cells PRC0, PRC1, PRC2, PRC3) and for cooperation between non-homogeneous cells (e.g. between the cell PRC0 and a purposive cell responsible of managing the configuration of the network elements through the management plane, that supports transmission of the management message requiring manual intervention of an operator).

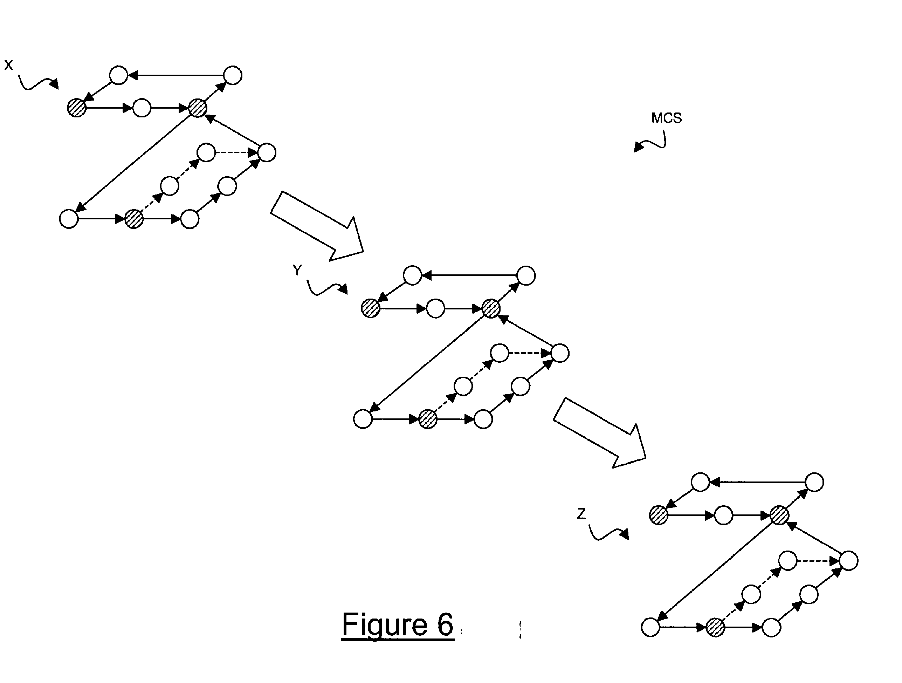

A multi-cell system MCS according to an embodiment of the present invention is schematically shown in Figure 6.

The multi-cell system MCS comprises three purposive cells X, Y and Z. The purposive cell X is a TPA, the purposive cell Y is a request process cell, and the purposive cell Z is a negotiation cell. As it can be seen in Figure 6, in each purposive cell X, Y and Z, the composite state is decomposed into an hierarchy of sub-states. Each purposive cell X, Y and Z is preferably organized according to a hierarchical structure, wherein higher level cells act as coordinators for the lower level cells (e.g. the TPA X -coordinates the request process cell Y, that in turn coordinates the negotiation cell Z). The operation of the multi-cell system MCS will be now briefly described. When the TPA X receives a request for a service from a TSA (not shown in Figure 4), it preferably forwards the request to the request process cell Y, whose purpose is processing the request. The request process cell Y, while processing the request, preferably invokes the negotiation cell Z, that preferably negotiate with the TSA. Based on the result of the negotiation with the TSA, the request process cell Y preferably decides whether to dispatch the jobs or handle exceptions in case of failure. The TPA X then transmits the result to the TSA. Therefore, advantageously, the purposive cells X, Y and Z cooperate for reaching the common purpose (i.e. the purpose of the coordinating TPA X) of providing a service to a TSA.

The Applicant has applied the above described purposive cells to a number of situations requiring reconfiguration of network elements. In a first situation, a multi-cell system has been developed for managing network security levels in a prototype communication network formed by four network elements. The first network element N1 was running a front-end application to serve end users; the second network element N2 implemented an information service registry providing naming and directory services; the third network element N3 and the fourth network element N4 were running TMN management services. The information about N3 and N4 (together with the service meta-data) was stored at N2.

A computation grid was implemented in the prototype communication network, using the above mentioned GLOBUS toolkit software. The resource management systems were distributed on N3 and N4 using two different engines and were encapsulated in two different web services implemented using the GLOBUS toolkit. At N3 and N4, both TL1 and SNMP resources were managed. The meta-data, the resource relationships and the user's profiles were managed on N2 (the user profile is managed by a "profile delivery agent" implemented at N2), while a management graphical user interface was implemented at N1.

The Applicant applied the following procedure. When a user requests a management service through N1, the TPA agent first assesses the user information to evaluate his current profile. Then, the TPA agent generates a personalized management path using the TMN information obtained through a TSA located on N2. Then, the profile delivery agent implemented at N2 connects to the TSA for finding management objects from the profile providers. The TSA looks up the service directory and communicates with a TPA for profile providers, in order to get information for accessing the services on N3 or N4. Finally, a profile delivery agent implemented in N2 accesses the profile management systems located on N3 and N4 to get the management objects by considering the relevant attribute values and the management expectations (i.e. the purpose). For example, if the management action located on the N3 has a duration of 2 hours and a security level equal to 4, and the management object for the same profile located on N4 has a duration 1 hour and security level equal to 3, the management object is selected based on the time expectation. If a shorter time period is requested, the management object located on N4 is selected. Moreover, if a higher security level is needed, the management object located on N 4 will be selected.

In further experiments, both the TSA and the TPA were evaluated with the time and price constraints. The TSA is configured to find the service providers, and to negotiate with the TPA using a response time parameter and a service price parameter. The service provider is selected according to the two parameters set by individual managers. The service constraints have higher priority than the other attributes. In other words, if the user sets these parameters, the TSA will first satisfy these constraints.

The above described experiments show that, by using a computation grid mechanism, applications advantageously consider the TSA as a service provider, while applications on service providers consider the TPA as a service consumer. Tasks such as service discovery, service negotiation, and resource scheduling can be managed by different types of mediators, i.e. agents executed in the computation grid. Therefore, the global transparency of the environment in application development is advantageously increased and the system performance is improved.

In a second situation, a multi-cell system has been developed for managing configuration of network elements in case of failure, in cooperation with a known network management system (based on the above described manager-agent approach). In particular, the Applicant has developed a multi-cell system configured to take decisions in order to avoid system instability possibly generated when a failure occurs in the communication system.

The purposive cells developed by the Applicant have the following features:
- they are configured to monitor a specific aspect of the communication network through operating system services;
- they are configured for interworking with application software suitable for managing the system recovery operations;
- the I/W with applications is managed through communications services (socket, pipes or signals); and
- they are configured to cooperate with other similar purposive cells on other controllers via services of the computation grid that are managed internally to the network element,by means of an internal LAN connection.

A possible mechanism implemented by purposive cell is a warm/cold switching of the network element Controller. In this case, a system management purposive cell may monitor a specific system resource (memory or disk, for instance). In case of resource failure, a suitable purposive cell may generate a request for controller switching, and the control of the network element is taken by a another controller. In this case, the purposive cell may communicate with a corresponding purposive cell on another controller to manage controller swap procedure, whereas the same purposive cell indicates to internal controller components (for instance, a MIB manager, a database manager, etc.) the operation to give control of the network element to the second controller and, at the same time, starts a recovery mode on first controller. Communication between purposive cells on different controllers relies on the computation grid mechanism, through an internal LAN of the network element.

The purposive cell is able to combine knowledge collection and decision making also in uncertainty condition. In other words, a purposive cell is based on the definition of a current state relative to the purposes, which definition is implemented through mechanisms for reconstructing the scenario. The current state is successively filtered through possible strategies that may allow reaching the purpose following different paths. The scenario is preferably reconstructed based on dynamic information (e.g. state of controller, card, resources in general, etc.) and statistic information (e.g. database configurations, etc.). The various strategies may be applied in different conditions of scenario reliability, thus facing possible uncertainty conditions (e.g., in case of managing security levels of a network element, conditions of Denial of Service attack may be declared or presumed. In the two cases, two different strategies may be followed: interface deactivation in the first case, firewall reconfiguration in the second case). This allows overcoming limits usually present in deterministic mechanisms.

The warm/cold controller recovery mechanism requires different system parameters to be measured at same time (memory, disk performance, network usage, ...). According to the single or multiple system parameters indicating a possible failure condition, the purposive cell can decide proper action out of a set of possible actions. Moreover, a hierarchy of purposive cells can be provided, where a monitoring agent may be responsible of collecting information and maintaining system knowledge, and a decision agent may be responsible of taking decisions such to informing an application to shutdown non-mandatory services, of taking actions for recovering the database when disks are nearly full, of managing processor swap in consistent way. In this context, the decision agent can be based on one or different decision approaches at the same time, such as for instance Bayesian-probabilistic mechanisms, rule based mechanisms or default reasoning, all based on assumptions network approach.

## Claims

1. A method for managing a communication network (CN) comprising at least one network element (N0), said method comprising the following steps:
a) implementing a computation grid in said communication network (CN);
b) executing a purposive cell (PRC) in said computation grid, said executing comprising:
b1) receiving a purpose command (PC) through said computation grid, said method being **characterized in that** said step b1) comprises receiving said purpose command (PC) indicating a purpose that said purposive cell (PRC) should reach and at least one strategy according to which said purposive cell (PRC) should try reaching said purpose, said purpose relating to an operation of configuring said at least one network element (N0); and
**in that** said executing further comprises:
b2) performing at least one action for reaching said purpose.

2. The method according to claim 1, wherein said step b2) comprises:
- by means of a purpose analyzer (PA) of said purposive cell (PRC), selecting a highest priority strategy among said at least one strategy;
- by means of a purposive logic (PL) of said purposive cell (PRC), performing said at least one action for reaching said purpose following said highest priority strategy; and
- by means of a purpose follower (PF) of said purposive cell (PRC), monitoring an outcome of said at least one action taken by the purposive logic (PL) and determining whether said purpose is reachable following said highest priority strategy.

3. The method according to claim 2, wherein:
- if said purpose follower (PF) determines that said purpose is reachable following said highest priority strategy, said purpose follower (PF) implements a negative feedback inducing said purposive cell (PRC) to converge towards said purpose;
- if said purpose follower (PF) determines that said purpose is not reachable following said highest priority strategy, said purpose analyzer (PA) determines whether said purpose command (PC) indicates a lower priority strategy, and:
- in the affirmative, said purpose analyzer (PA) selects said lower priority strategy and said purposive logic (PL) performs said at least one action for reaching said purpose following said lower priority strategy; and
- in the negative, said purpose follower (PF) implements a positive feedback inducing said purposive cell (PRC) to converge towards a
- stable meta-state.

4. The method according to any of the preceding claims, wherein-said step b2) comprises:
- delegating said at least one action to a further purposive cell; and
- receiving from said further purposive cell a message indicating an outcome of said at least one action.

5. The method according to claim 4, wherein said step b2) comprises:
- transmitting a further purpose command (PC1, PC2, PC3) to said further purposive cell (PRC1, PRC2, PRC3), said further purpose command (PC1, PC2, PC3) indicating a further purpose that said further purposive cell (PC1, PC2, PC3) should reach; and
- receiving from said further purposive cell (PC1, PC2, PC3) a message indicating whether said further purposive cell (PC1, PC2, PC3) reached said further purpose.

6. The method according to any of the preceding claims, wherein said step b2) comprises:
- receiving from a service consumer connected to said computation grid a request for consuming a management service;
- processing said request; and
- in case of positive outcome of said processing, performing at least one action for providing said management service to said service consumer.

7. The method according to any of claims 1 to 6, wherein said step b2) comprises:
- receiving from a service consumer connected to said computation grid a request for localizing a management service in said computation grid;
- processing said request; and
- in case of positive outcome of said processing, performing at least one action for localizing a management service in said computation grid.

8. A communication system (CS) comprising a communication network (CN), said communication network (CN) comprising at least one network element (N0), said communication system (CS) further comprising:
a) a computation grid implemented in said communication network (CN); - and
b) a purposive cell (PRC) suitable for being executed in said computation grid, said purposive cell (PRC) being configured to:
b1) receive a purpose command (PC) through said computation grid, said communication system (CS) being **characterized in that** said purpose command (PC) indicates a purpose that said purposive cell (PRC) should reach and at least one strategy according to which said purposive cell (PRC) should try reaching said purpose, said purpose relating to an operation of configuring said at least one network element (N0); and **in that** said purposive cell (PRC) is further configured to:
b2) perform at least one action for reaching said purpose.

9. The communication system (CS) according to claim 8, wherein said purposive cell (PRC) comprises:
- a purpose analyzer (PA) configured to select a highest priority strategy among said at least one strategy;
- a purposive logic (PL) configured to perform said at least one action for reaching said purpose following said highest priority strategy; and
- a purpose follower (PF) configured to monitor an outcome of said at least one action taken by the purposive logic (PL) and to determine whether said purpose is reachable following said highest priority strategy.

10. The communication system (CS) according to claim 9, wherein:
- if said purpose follower (PF) determines that said purpose is reachable following said highest priority strategy, said purpose follower (PF) implements a negative feedback inducing said purposive cell (PRC) to converge towards said purpose;
- if said purpose follower (PF) determines that said purpose is not reachable following said highest priority strategy, said purpose analyzer (PA) determines whether said purpose command (PC) indicates a lower priority strategy, and:
- in the affirmative, said purpose analyzer (PA) selects said lower priority strategy and said purposive logic (PL) performs said at least one action for reaching said purpose following said lower priority strategy; and
- in the negative, said purpose follower (PF) implements a positive feedback inducing said purposive cell (PRC) to converge towards a stable meta-state.

11. The communication system (CS) according to any of claims 8 to 10, wherein said purposive cell (PRC) is configured to:
- delegate said at least one action to a further purposive cell; and
- receive from said further purposive cell a message indicating an outcome of said at least one action.

12. The communication system (CS) according to claim 11, wherein said purposive cell (PRC) is configured to:
- transmit a further purpose command (PC1, PC2, PC3) to said further purposive cell (PRC1, PRC2, PRC3), said further purpose command (PC1, PC2, PC3) indicating a further purpose that said further purposive cell (PC1, PC2, PC3) should reach; and
- receive from said further purposive cell (PC1, PC2, PC3) a message indicating whether said further purposive cell (PC1, PC2, PC3) reached said further purpose.

13. The communication system (CS) according to any of claims 8 to 12, wherein said purposive cell (PRC) is configured to:
- receive from a service consumer connected to said computation grid a request for consuming a management service;
- process said request; and
- in case of positive outcome of said processing, perform at least one action for providing said management service to said service consumer.

14. The communication system (CS) according to any of claims 8 to 12, wherein said purposive cell (PRC) is configured to:
- receive from a service consumer connected to said computation grid a request for localizing a management service in said computation grid;
- process said request; and
- in case of positive outcome of said processing, perform at least one action for localizing a management service in said computation grid.

15. A purposive cell (PRC) suitable for being executed in a computation grid implemented in a communication network (CN), said communication network (CN) comprising at least one network element (N0), said purposive cell (PRC) being configured to:
b1) receive a purpose command (PC) through said computation grid, said purposive cell (PRC) being **characterized in that** said purpose command (PC) indicates a purpose that said purposive cell (PRC) should reach and at least one strategy according to which said purposive cell (PRC) should try reaching said purpose, said purpose relating to an operation of configuring said at least one network element (N0); and **in that** said purposive cell (PRC) is further configured to:
b2) perform at least one action for reaching said purpose.

## Patentansprüche

1. Verfahren zur Verwaltung eines Kommunikationsnetzwerks (CN) mit mindestens einem Netzwerkelement (N0), wobei das besagte Verfahren die folgenden Schritte umfasst:
a) Implementieren eines Berechnungsgitters in dem besagten Kommunikationsnetzwerk (CN);
b) Ausführen einer zweckbestimmten Zelle (PRC) in dem besagten Berechnungsgitter, wobei das besagte Ausführen umfasst:
b1) Empfangen eines Zweckbefehls (PC) über das besagte Berechnungsgitter, wobei das besagte Verfahren **dadurch gekennzeichnet ist, dass** Schritt b1) das Empfangen des besagten Zweckbefehls (PC), welcher einen Zweck angibt, den die besagte zweckbestimmte Zelle (PRC) erreichen soll, sowie mindestens eine Strategie, gemäß welcher die besagte zweckbestimmte Zelle (PRC) versuchen soll, den besagten Zweck zu erreichen, wobei sich der besagte Zweck auf einen Konfigurationsvorgang des besagten mindestens einen Netzwerkelement (N0) bezieht; und
dass das besagte Ausführen weiterhin umfasst:
b2) Durchführen mindestens einer Aktion, um den besagten Zweck zu erreichen.

2. Das Verfahren nach Anspruch 1, wobei der besagte Schritt b2) umfasst:
- Anhand einer Zweckanalysevorrichtung (PA) der besagten zweckbestimmten Zelle (PRC), Auswählen einer Strategie der höchsten Priorität von der besagten mindestens einen Strategie;
- Anhand einer zweckbestimmten Logik (PL) der besagten zweckbestimmten Zelle (PRC), Durchführen der besagten mindestens einen Aktion, um den besagten Zweck gemäß der besagten Strategie der höchsten Priorität zu erreichen; und
- Anhand eines Zweckverfolgers (PF) der besagten zweckbestimmten Zelle (PRC), Überwachen eines Ergebnisses der besagten von der zweckbestimmten Logik (PL) durchgeführten mindestens einen Aktion, und Bestimmen, ob der besagte Zweck gemäß der besagten Strategie der höchsten Priorität erreichbar ist.

3. Das Verfahren nach Anspruch 2, wobei:
- wenn der besagte Zweckverfolger (PF) bestimmt, dass der besagte Zweck gemäß der besagten Strategie der höchsten Priorität erreichbar ist, der besagte Zweckverfolger (PF) eine negative Rückkopplung implementiert, um zu veranlassen, dass sich die besagte zweckbestimmte Zelle (PRC) dem besagten Zweck nähert;
- wenn der besagte Zweckverfolger (PF) bestimmt, dass der besagte Zweck nicht gemäß der besagten Strategie der höchsten Priorität erreichbar ist, die besagte Zweckanalysevorrichtung (PA) ermittelt, ob der besagte Zweckbefehl (PC) eine Strategie einer niedrigeren Priorität angibt, und:
- Wenn dies der Fall ist, die besagte Zweckanalysevorrichtung (PA) die besagte Strategie der niedrigeren Priorität auswählt und die besagte zweckbestimmte Logik (PL) die besagte mindestens eine Aktion durchführt, um den besagten Zweck gemäß der besagten Strategie der niedrigeren Priorität zu erreichen; und
- wenn dies nicht der Fall ist, der besagte Zweckverfolger (PF) eine positive Rückkopplung implementiert, um zu veranlassen, dass sich die besagte zweckbestimmte Zelle (PRC) einem stabilen Meta-Zustand nähert.

4. Das Verfahren nach einem beliebigen der vorstehenden Ansprüche, wobei der besagte Schritt b2) umfasst:
- Delegieren der besagten mindestens einen Aktion an eine weitere zweckbestimmte Zelle; und
- Empfangen, von der besagten weiteren zweckbestimmten Zelle, einer Nachricht mit Angabe eines Ergebnisses der besagten mindestens einen Aktion.

5. Das Verfahren nach Anspruch 4, wobei der besagte Schritt b2) umfasst:
- Übertragen eines weiteren Zweckbefehls (PC1, PC2, PC3) an die besagte weitere zweckbestimmte Zelle (PRC1, PRC2, PRC3), wobei der besagte weitere Zweckbefehl (PC1, PC2, PC3) einen weiteren Zweck angibt, welchen die besagte weitere zweckbestimmte Zelle (PC1, PC2, PC3) erreichen soll; und
- Empfangen, von der besagten weiteren zweckbestimmten Zelle (PC1, PC2, PC3), einer Nachricht mit der Angabe, ob die besagte weitere zweckbestimmte Zelle (PC1, PC2, PC3) den besagten weiteren Zweck erreicht hat.

6. Das Verfahren nach einem beliebigen der vorstehenden Ansprüche, wobei der besagte Schritt b2) umfasst:
- Empfangen, von einem mit dem besagten Berechnungsgitter verbundenen Dienstverbraucher, einer Anforderung für den Verbrauch eines Verwaltungsdienstes;
- Verarbeiten der besagten Anforderung; und
- im Fall eines positiven Ergebnisses der besagten Verarbeitung, Durchführen mindestens einer Aktion, um den besagten Verwaltungsdienst an den besagten Dienstverbraucher bereitzustellen.

7. Das Verfahren nach einem beliebigen der Ansprüche 1 bis 6, wobei der besagte Schritt b2) umfasst:
- Empfangen, von einem mit dem besagten Berechnungsgitter verbundenen Dienstverbraucher, einer Anforderung, um den besagten Verwaltungsdienst in dem besagten Berechnungsgitter zu lokalisieren;
- Verarbeiten der besagten Anforderung; und
- im Fall eines positiven Ergebnisses der besagten Verarbeitung, Durchführen mindestens einer Aktion, um den besagten Verwaltungsdienst in dem besagten Berechnungsgitter zu lokalisieren.

8. Kommunikationssystem (CS) mit einem Kommunikationsnetzwerk (CN), wobei das besagte Kommunikationsnetzwerk (CN) mindestens ein Netzwerkelement (N0) umfasst, wobei das besagte Kommunikationssystem (CS) weiterhin umfasst:
a) Ein Berechnungsgitter, welches in dem besagten Kommunikationsnetzwerk (CN) implementiert wird; und
b) eine zweckbestimmte Zelle (PRC), welche in dem besagten Berechnungsgitter ausgeführt werden kann, wobei die besagte zweckbestimmte Zelle (PRC) für die folgenden Schritte konfiguriert ist:
b1) Empfangen eines Zweckbefehls (PC) über das besagte Berechnungsgitter, wobei das besagte Kommunikationssystem (CS) **dadurch gekennzeichnet ist, dass** der besagte Zweckbefehl (PC) einen Zweck, welchen die besagte zweckbestimmte Zelle (PRC) erreichen soll, sowie mindestens eine Strategie, gemäß welcher die besagte zweckbestimmte Zelle (PRC) versuchen soll, den besagten Zweck zu erreichen, angibt, wobei sich der besagte Zweck auf einen Konfigurationsvorgang des besagten mindestens einen Netzwerkelements (N0) bezieht; und
dass die besagte zweckbestimmte Zelle (PRC) weiterhin für den folgenden Schritt konfiguriert ist:
b2) Durchführen mindestens einer Aktion, um den besagten Zweck zu erreichen.

9. Das Kommunikationssystem (CS) nach Anspruch 8, wobei die zweckbestimmte Zelle (PRC) umfasst:
- Eine Zweckanalysevorrichtung (PA), welche für das Auswählen einer Strategie der höchsten Priorität von der besagten mindestens einen Strategie konfiguriert ist;
- Eine zweckbestimmten Logik (PL), welche für das Durchführen der besagten mindestens einen Aktion konfiguriert ist, um den besagten Zweck gemäß der besagten Strategie der höchsten Priorität zu erreichen; und
- Einen Zweckverfolger (PF), welcher für das Überwachen eines Ergebnisses der besagten von der zweckbestimmten Logik (PL) durchgeführten mindestens einen Aktion und für das Bestimmen, ob der besagte Zweck gemäß der besagten Strategie der höchsten Priorität erreichbar ist, konfiguriert ist.

10. Das Kommunikationssystem (CS) nach Anspruch 9, wobei:
- wenn der besagte Zweckverfolger (PF) bestimmt, dass der besagte Zweck gemäß der besagten Strategie der höchsten Priorität erreichbar ist, der besagte Zweckverfolger (PF) eine negative Rückkopplung implementiert, um zu veranlassen, dass sich die besagte zweckbestimmte Zelle (PRC) dem besagten Zweck nähert;
- wenn der besagte Zweckverfolger (PF) bestimmt, dass der besagte Zweck nicht gemäß der besagten Strategie der höchsten Priorität erreichbar ist, die besagte Zweckanalysevorrichtung (PA) ermittelt, ob der besagte Zweckbefehl (PC) eine Strategie einer niedrigeren Priorität angibt, und:
- Wenn dies der Fall ist, die besagte Zweckanalysevorrichtung (PA) die besagte Strategie der niedrigeren Priorität auswählt und die besagte zweckbestimmte Logik (PL) die besagte erste Aktion durchführt, um den besagten Zweck gemäß der besagten Strategie der niedrigeren Priorität zu erreichen; und
- wenn dies nicht der Fall ist, der besagte Zweckverfolger (PF) eine positive Rückkopplung implementiert, um zu veranlassen, dass sich die besagte zweckbestimmte Zelle (PRC) einem stabilen Meta-Zustand nähert.

11. Das Kommunikationssystem (CS) nach einem beliebigen der Ansprüche 8 bis 10, wobei die besagte zweckbestimmte Zelle (PRC) für die folgenden Schritte konfiguriert ist:
- Delegieren der besagten mindestens einen Aktion an eine weitere zweckbestimmte Zelle; und
- Empfangen, von der besagten weiteren zweckbestimmten Zelle, einer Nachricht mit der Angabe eines Ergebnisses der besagten mindestens einen Aktion.

12. Das Kommunikationssystem (CS) nach Anspruch 11, wobei die besagte zweckbestimmte Zelle (PRC) für die folgenden Schritte konfiguriert ist:
- Übertragen eines weiteren Zweckbefehls (PC1, PC2, PC3) an die besagte weitere zweckbestimmte Zelle (PRC1, PRC2, PRC3), wobei der besagte weitere Zweckbefehl (PC1, PC2, PC3) einen weiteren Zweck, welchen die besagte weitere zweckbestimmte Zelle (PC1, PC2, PC3) erreichen soll, angibt; und
- Empfangen, von der besagten weiteren zweckbestimmten Zelle (PC1, PC2, PC3), einer Nachricht, welche angibt, ob die besagte weitere zweckbestimmte Zelle (PC1, PC2, PC3) den besagten weiteren Zweck erreicht hat.

13. Das Kommunikationssystem (CS) nach einem beliebigen der Ansprüche 8 bis 12, wobei die besagte zweckbestimmte Zelle (PRC) für die folgenden Schritte konfiguriert ist:
- Empfangen, von einem mit dem besagten Berechnungsgitter verbundenen Dienstverbraucher, einer Anforderung für den Verbrauch eines Verwaltungsdienstes;
- Verarbeiten der besagten Anforderung; und
- im Fall eines positiven Ergebnisses der besagten Verarbeitung, Durchführen mindestens einer Aktion, um den besagten Verwaltungsdienst an den besagten Dienstverbraucher bereitzustellen.

14. Das Kommunikationssystem (CS) nach einem beliebigen der Ansprüche 8 bis 12, wobei de besagte zweckbestimmte Zelle (PRC) für die folgenden Schritte konfiguriert ist:
- Empfangen, von einem mit dem besagten Berechnungsgitter verbundenen Dienstverbraucher, einer Anforderung für das Lokalisieren eines Verwaltungsdienstes in dem besagten Berechnungsgitter;
- Verarbeiten der besagten Anforderung; und
- im Fall eines positiven Ergebnisses der besagten Verarbeitung, Durchführen mindestens einer Aktion, um den Verwaltungsdienst in dem besagten Berechnungsgitter zu lokalisieren.

15. Zweckbestimmte Zelle (PRC) für das Ausführen in einem in einem Kommunikationsnetzwerk (CN) implementierten Berechnungsgitter; wobei das besagte Kommunikationsnetzwerk (CN) mindestens ein Netzwerkelement (N0) umfasst, wobei die besagte zweckbestimmte Zelle (PRC) für die folgenden Schritte konfiguriert ist:
b1) Empfangen eines Zweckbefehls (PC) über das besagte Berechnungsgitter, wobei die besagte zweckbestimmte Zelle (PRC) **dadurch gekennzeichnet ist, dass** der besagte Zweckbefehl (PC) einen Zweck, welchen die besagte zweckbestimmte Zelle (PRC) erreichen soll, sowie mindestens eine Strategie, gemäß welcher die besagte zweckbestimmte Zelle (PRC) versuchen soll, den besagten Zweck zu erreichen, angibt, wobei sich der besagte Zweck auf einen Konfigurationsvorgang des besagten mindestens einen Netzwerkelements (N0) bezieht; und dass die besagte zweckbestimmte Zelle (PRC) weiterhin für den folgenden Schritt konfiguriert ist:
b2) Durchführen mindestens einer Aktion, um den besagten Zweck zu erreichen.

## Revendications

1. Procédé de gestion d'un réseau de communication (CN) comprenant au moins un élément de réseau (N0), ledit procédé comprenant les étapes suivantes :
a) mise en oeuvre d'une grille de calcul dans ledit réseau de communication (CN) ;
b) exécution d'une cellule de détermination d'objectif (PRC) dans ladite grille de calcul, ladite exécution comprenant :
b1) réception d'une commande d'objectif (PC) par le biais de ladite grille de calcul, ledit procédé étant **caractérisé en ce que** ladite étape b1) comprend la réception de ladite commande d'objectif (PC) indiquant un objectif que ladite cellule de détermination d'objectif (PRC) devrait atteindre et au moins une stratégie conformément à laquelle ladite cellule de détermination d'objectif (PRC) devrait essayer d'atteindre ledit objectif, ledit objectif se rapportant à une opération de configuration dudit au moins un élément de réseau (N0) ; et
**en ce que** ladite exécution comprend en outre :
b2) accomplissement d'au moins une action pour atteindre ledit objectif.

2. Procédé selon la revendication 1, dans lequel ladite étape b2) comprend :
- au moyen d'un analyseur d'objectif (PA) de ladite cellule de détermination d'objectif (PRC), sélection d'une stratégie de priorité supérieure parmi ladite au moins une stratégie ;
- au moyen d'une logique d'objectif (PL) de ladite cellule de détermination d'objectif (PRC), accomplissement de ladite au moins une action pour atteindre ledit objectif en suivant ladite stratégie de priorité supérieure; et
- au moyen d'un suiveur d'objectif (PF) de ladite cellule de détermination d'objectif (PRC), surveillance d'un résultat de ladite au moins une action entreprise par ladite logique d'objectif (PL) et détermination si ledit objectif peut être atteint en suivant ladite stratégie de priorité supérieure.

3. Procédé selon la revendication 2, dans lequel:
- si ledit suiveur d'objectif (PF) détermine que ledit objectif peut être atteint en suivant ladite stratégie de priorité supérieure, ledit suiveur d'objectif (PF) met en oeuvre une rétroaction négative induisant la convergence de ladite cellule de détermination d'objectif (PRC) en direction dudit objectif ;
- si ledit suiveur d'objectif (PF) détermine que ledit objectif ne peut pas être atteint en suivant ladite stratégie de priorité supérieure, ledit analyseur d'objectif (PA) détermine si ladite commande d'objectif (PC) indique une stratégie de priorité inférieure, et :
- dans l'affirmative, ledit analyseur d'objectif (PA) sélectionne ladite stratégie de priorité inférieure et ladite logique d'objectif (PL) accomplit ladite au moins une action pour atteindre ledit objectif en suivant ladite stratégie de priorité inférieure; et
- dans la négative, ledit suiveur d'objectif (PF) met en oeuvre une rétroaction positive induisant la convergence de ladite cellule de détermination d'objectif (PRC) en direction d'un méta-état stable.

4. Procédé selon l'une quelconque des revendications précédentes, dans lequel ladite étape b2) comprend :
- délégation de ladite au moins une action à une cellule de détermination d'objectif additionnelle ; et
- réception de ladite cellule de détermination d'objectif additionnelle d'un message indiquant un résultat de ladite au moins une action.

5. Procédé selon la revendication 4, dans lequel ladite étape b2) comprend :
- transmission d'une commande d'objectif additionnelle (PC1, PC2, PC3) à ladite cellule de détermination d'objectif additionnelle (PRC1, PRC2, PRC3), ladite commande d'objectif additionnelle (PC1, PC2, PC3) indiquant un objectif additionnel que ladite cellule de détermination d'objectif additionnelle (PC1, PC2, PC3) devrait atteindre ; et
- réception de ladite cellule de détermination d'objectif additionnelle (PC1, PC2, PC3) d'un message indiquant si ladite cellule de détermination d'objectif additionnelle (PC1, PC2, PC3) a atteint ledit objectif additionnel.

6. Procédé selon l'une quelconque des revendications précédentes, dans lequel ladite étape b2) comprend :
- réception de la part d'un client du service connecté à ladite grille de calcul d'une demande de consommation d'un service de gestion ;
- traitement de ladite demande ; et
- dans le cas d'un résultat positif dudit traitement, accomplissement d'au moins une action pour fournir ledit service de gestion audit client du service.

7. Procédé selon l'une quelconque des revendications 1 à 6, dans lequel ladite étape b2) comprend :
- réception de la part d'un client du service connecté à ladite grille de calcul d'une demande de localisation d'un service de gestion dans ladite grille de calcul ;
- traitement de ladite demande ; et
- dans le cas d'un résultat positif dudit traitement, accomplissement d'au moins une action pour localiser un service de gestion dans ladite grille de gestion.

8. Système de communication (CS) comprenant un réseau de communication (CN), ledit réseau de communication (CN) comprenant au moins un élément de réseau (N0), ledit système de communication (CS) comprenant en outre :
a) une grille de calcul mise en oeuvre dans ledit réseau de communication (CN) ; et
b) une cellule de détermination d'objectif (PRC) conçue pour être exécutée dans ladite grille de calcul, ladite cellule de détermination d'objectif (PRC) étant configurée pour:
b1) recevoir une commande d'objectif (PC) par le biais de ladite grille de calcul, ledit système de communication (CS) étant **caractérisé en ce que** ladite commande d'objectif (PC) indique un objectif que ladite cellule de détermination d'objectif (PRC) devrait atteindre et au moins une stratégie conformément à laquelle ladite cellule de détermination d'objectif (PRC) devrait essayer d'atteindre ledit objectif, ledit objectif se rapportant à une opération de configuration dudit au moins un élément de réseau (N0) ; et
**en ce que** ladite cellule de détermination d'objectif (PRC) est en outre configurée pour:
b2) accomplir au moins une action pour atteindre ledit objectif.

9. Système de communication (CS) selon la revendication 8, dans lequel ladite cellule de détermination d'objectif (PRC) comprend :
- un analyseur d'objectif (PA) configuré pour sélectionner une stratégie de priorité supérieure parmi ladite au moins une stratégie ;
- une logique d'objectif (PL) configurée pour accomplir ladite au moins une action pour atteindre ledit objectif en suivant ladite stratégie de priorité supérieure ; et
- un suiveur d'objectif (PF) configuré pour surveiller un résultat de ladite au moins une action entreprise par ladite logique d'objectif (PL) et pour déterminer si ledit objectif peut être atteint en suivant ladite stratégie de priorité supérieure.

10. Système de communication (CS) selon la revendication 9, dans lequel :
- si ledit suiveur d'objectif (PF) détermine que ledit objectif peut être atteint en suivant ladite stratégie de priorité supérieure, ledit suiveur d'objectif (PF) met en oeuvre une rétroaction négative induisant la convergence de ladite cellule de détermination d'objectif (PRC) en direction dudit objectif ;
- si ledit suiveur d'objectif (PF) détermine que ledit objectif ne peut pas être atteint en suivant ladite stratégie de priorité supérieure, ledit analyseur d'objectif (PA) détermine si ladite commande d'objectif (PC) indique une stratégie de priorité inférieure, et :
- dans l'affrmative, ledit analyseur d'objectif (PA) sélectionne ladite stratégie de priorité inférieure et ladite logique d'objectif (PL) accomplit ladite au moins une action pour atteindre ledit objectif en suivant ladite stratégie de priorité inférieure; et
- dans la négative, ledit suiveur d'objectif (PF) met en oeuvre une rétroaction positive induisant la convergence de ladite cellule de détermination d'objectif (PRC) en direction d'un méta-état stable.

11. Système de communication (CS) selon l'une quelconque des revendications 8 à 10, dans lequel ladite cellule de détermination d'objectif (PRC) est configurée pour :
- déléguer ladite au moins une action à une cellule de détermination d'objectif additionnelle ; et
- recevoir de ladite cellule de détermination d'objectif additionnelle un message indiquant un résultat de ladite au moins une action.

12. Système de communication (CS) selon la revendication 11, dans lequel ladite cellule de détermination d'objectif (PRC) est configurée pour :
- transmettre une commande d'objectif additionnelle (PC1, PC2, PC3) à ladite cellule de détermination d'objectif additionnelle (PRC1, PRC2, PRC3), ladite commande d'objectif additionnelle (PC1, PC2, PC3) indiquant un objectif additionnel que ladite cellule de détermination d'objectif additionnelle (PC1, PC2, PC3) devrait atteindre ; et
- recevoir de ladite cellule de détermination d'objectif additionnelle (PC1, PC2, PC3) un message indiquant si ladite cellule de détermination d'objectif additionnelle (PC1, PC2, PC3) a atteint ledit objectif additionnel.

13. Système de communication (CS) selon l'une quelconque des revendications 8 à 12, dans lequel ladite cellule de détermination d'objectif (PRC) est configurée pour :
- recevoir de la part d'un client du service connecté à ladite grille de calcul une demande de consommation d'un service de gestion ;
- traiter ladite demande; et
- dans le cas d'un résultat positif dudit traitement, accomplir au moins une action pour fournir ledit service de gestion audit client du service.

14. Système de communication (CS) selon l'une quelconque des revendications 8 à 12, dans lequel ladite cellule de détermination d'objectif (PRC) est configurée pour :
- recevoir de la part d'un client du service connecté à ladite grille de calcul une demande de localisation d'un service de gestion dans ladite grille de calcul ;
- traiter ladite demande; et
- dans le cas d'un résultat positif dudit traitement, accomplir au moins une action pour localiser un service de gestion dans ladite grille de gestion.

15. Cellule de détermination d'objectif (PRC) conçue pour être exécutée dans une grille de calcul mise en oeuvre dans un réseau de communication (CN), ledit réseau de communication (CN) comprenant au moins un élément de réseau (N0), ladite cellule de détermination d'objectif (PRC) étant configurée pour :
b1) recevoir une commande d'objectif (PC) par le biais de ladite grille de calcul, ladite cellule de détermination d'objectif (PRC) étant **caractérisée en ce que** ladite commande d'objectif (PC) indique un objectif que ladite cellule de détermination d'objectif (PRC) devrait atteindre et au moins une stratégie conformément à laquelle ladite cellule de détermination d'objectif (PRC) devrait essayer d'atteindre ledit objectif, ledit objectif se rapportant à une opération de configuration dudit au moins un élément de réseau (N0) ; et **en ce que** ladite cellule de détermination d'objectif (PRC) est en outre configurée pour :
b2) accomplir au moins une action pour atteindre ledit objectif.
